# EUROPEAN PATENT SPECIFICATION

(11) **EP 1 590 592 B1**
(45) Date of publication and mention of the grant of the patent: **31.10.2007**
(21) Application number: 04707243.4
(22) Date of filing: 02.02.2004
(51) Int. Cl.: F16L 9/133, F24F 13/02

(54) **PLASTIC VENTILATION DUCT THAT HAS AT LEAST TWO LAYERS AND IS MADE AT LEAST PARTIALLY ANTISTATIC**
ZUMINDEST TEILWEISE ANTISTATISCH AUSGEFÜHRTER KUNSTSTOFFLÜFTUNGSKANAL MIT MINDESTENS ZWEI LAGEN
CONDUIT DE VENTILATION EN PLASTIQUE PRESENTANT AU MOINS DEUX COUCHES ET AU MOINS PARTIELLEMENT ANTISTATIQUE

(30) Priority: 03.02.2003 FI 20030161
(43) Date of publication of application: 02.11.2005
(73) Proprietor: Uponor Innovation AB, 513 81 Fristad (SE)
(72) Inventor: JUUTI, Rauno, FIN-15550 Nastola (FI)
(74) Representative: Huhtanen, Ossi Jaakko
(86) International application number: PCT/FI2004/000051
(87) International publication number: WO 2004/070252

(56) References cited:
- EP-A1- 1 036 968
- WO-A1-00/21750
- DE-A1- 10 012 832
- US-A- 5 916 945

## Description

### BACKGROUND OF THE INVENTION

The invention relates to a plastic ventilation duct that has at least two layers and is made at least partially antistatic.

US patent 4,355,568, for instance, discloses the making of ventilation ducts from plastic. A plastic ventilation duct has several advantages over a metal ventilation duct. The inner and outer surface of a plastic ventilation duct can be made very smooth so that impurities do not easily adhere to the ventilation duct. A smooth surface further makes the cleaning of the ventilation duct easy. The machining and installation of plastic ventilation ducts is simple and easy.

Fl utility model 2701 discloses a two-layer plastic ventilation duct whose inner layer is made permanently antistatic by adding an electrically conducting material, such as carbon, to the matrix plastic that forms the inner layer. ZA publication 812,724 discloses a two-layer plastic pipe with an antistatic inner layer, which is used as a ventilation pipe in mines, for instance. The antistaticity is achieved by carbon black or graphite. DE publication 4,221,568 discloses a plastic pipe whose inner surface is made antistatic by forming longitudinal electrically conducting strips on the inner surface of the pipe. Making the inner layer of a plastic pipe permanently antistatic prevents the adhering of dust to the inner surface of the ventilation duct. Thus, the ventilation duct remains clean and air quality can be kept good. It has, however, been found that the formation of antistaticity in a plastic material in the solutions described above is quite costly. In the solutions described above, the antistaticity is, therefore, formed only on the inner layer of the ducts. Further, when using carbon black, for instance, as the material causing antistaticity, plastic turns black. If carbon black were also used on the outer layer of the ventilation duct, it would be black, which in several cases would be an unsatisfactory solution in terms of the aesthetics of the appearance. Because the outer layer in a plastic ventilation duct is, therefore, not made antistatic, the outer surface of the plastic ventilation duct grows somewhat dusty and dirty as a result. When installing a ventilation duct, it needs to be machined for instance when cut to a suitable fixed size. The dust and chips loosened when the wall of a ventilation duct is machined may adhere to the ventilation duct causing uncleanliness. Further, the removal of the dust and chips is quite difficult, because they adhere to the surfaces to be cleaned due to static electricity.
DE 100 12 832 A1 discloses a plastic ventilation duct according to the preamble of claim 1. The ventilation duct comprises an outer layer and an inner layer and an intermediate layer between the outer layer and the inner layer. The inner layer is antistatic.

### BRIEF DESCRIPTION OF THE INVENTION

It is an object of the present invention to provide a novel and improved plastic ventilation duct.

The ventilation duct of the invention is characterized by the features of claim 1.

The essential idea of the invention is that the ventilation duct has at least two mainly plastic layers in such a manner that the inner layer of the ventilation duct is made permanently antistatic and the outer layer is temporarily antistatic. For example, the outer layer has a short-term antistatic additive mixed with its plastic material. The idea of one embodiment is that there is at least one intermediate layer between the outer layer and inner layer. The outer layer contains a colouring agent, fire retardant and short-term antistatic additive. The intermediate layer can also contain a short-term antistatic additive.

The invention provides the advantage that dust and dirt do not essentially adhere to the inner surface of the ventilation duct or to the outer surface during the beginning of its lifespan. For instance, during the installation of a ventilation duct, the dust and chips from machining do not essentially adhere to it. If the ventilation duct is made entirely antistatic, the sawdust and chips also do not essentially adhere to any other surfaces to be cleaned. If the outer layer is formed temporarily antistatic for example with a short-term antistatic additive, the total manufacturing costs of the pipe can be kept reasonably low. If a short-term antistatic additive is used in the outer layer, the antistaticity of the outer layer disappears with time. However, it is possible to provide at reasonable cost antistaticity that lasts for 1 to 3 years, for instance. When i n-stalling the ventilation duct, both the inner layer and the outer layer of the ventilation duct are antistatic, so the advantages described above can be utilized. After installation, it is still useful to have an antistatic inner layer, but the antistaticity of the outer layer is no longer essential after installation. By also arranging an intermediate layer to the ventilation duct, the material costs of the ventilation duct can be made reasonable. The inner layer and outer layer, in which more expensive materials, such as a colouring agent and fire retardant, are used can then be made thinner than the intermediate layer which can be made of a more inexpensive material.

### BRIEF DESCRIPTION OF THE FIGURES

The invention will be described in more detail in the attached drawings, in which
Figure 1 is a schematic end view of a plastic ventilation duct in cross-profile, and
Figure 2 a schematic end view of a second plastic ventilation duct in cross-profile.

### DETAILED DESCRIPTION OF THE INVENTION

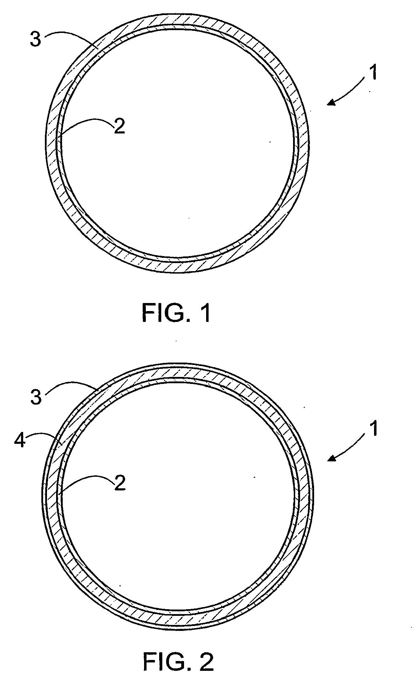

Figure 1 shows a ventilation duct 1. The cross-profile of the ventilation duct 1 is essentially round. The cross-profile of the ventilation duct 1 can also be of another shape. The cross-profile of the ventilation duct 1 can thus be oblong or square, for instance.

The inner layer 2 of the ventilation duct 1 is mainly made of a polyolefin, such as polypropylene PP, polyethylene PE or cross-linked polyethylene PEX. The use of another plastic material, such as polyvinylchloride PVC, is also possible. The inner layer 2 is made permanently antistatic. The inner layer 2 can be made permanently antistatic for instance by adding carbon black to the plastic material. The amount of carbon black can be 5 to 40%, for instance. Permanent antistaticity can also be obtained with another conducting filler, such as metal. The filler can be powder or fibres, for instance. The permanently antistatic layer can also be made of a conducting polymer, such as polyaniline or polyamide-polyether-block copolymer.

The plastic material of the outer layer 3 can be a plastic material corresponding to the one used in the inner layer 2. A short-term antistatic additive is mixed with the plastic material of the outer layer 3. The term short-term antistatic additive means that the additive does not make the plastic material permanently antistatic. Suitable short-term antistatic additives include fatty acid esters, ethoxylated alkylamines, diethanolamides and ethoxylated alcohol. The property providing the antistaticity in such additives is based on their ability to migrate to the surface of the material and to absorb water from the surroundings. A thin absorbed water layer conducts a possible electric charge away. It is also possible to use an ionic antistatic additive, such as alkylsulphonate, as the antistatic additive. Antistatic additives may also function as lubricants, in which case friction and, therefore, static charge generation is reduced.

The percentage of the short-term antistatic additive in the outer layer 3 material is typically less than 1%. The percentage of the antistatic additive can be 0.5%, for instance. The duration of the antistaticity of the outer layer is defined on the basis of the properties and amount of the selected antistatic additive. The duration of the antistaticity of the outer layer can be defined as 1 to 3 years, for example. The outer layer then remains antistatic from the manufacture of the ventilation duct to at least its installation. Thus, because the outer layer 3 does not include an agent that would make it permanently antistatic, its antistatic property disappears at some stage, i.e. the outer layer 3 is temporarily antistatic.

The thickness of the inner layer 2 can be 0.1 to 0.3 mm, for instance, and the thickness of the outer layer 3 can be 1 to 5 mm, for instance. The outer diameter of the ventilation duct 1 may vary between 80 to 300 mm, for instance.

A fire retardant, such as halogenated retardant, magnesium hydroxide or ammonium polyphosphate, can also be mixed with the outer layer 3. It is further possible to mix a suitable colouring agent with the outer layer 3. This way, the ventilation duct obtains the desired colour.

Figure 2 shows a ventilation duct 1, in which there is an intermediate layer 4 between the inner layer 2 and the outer layer 3. The inner layer 2 can be as that of the ventilation duct of Figure 1. The outer layer 3 may contain a colouring agent, fire retardant, and short-term antistatic additive, for instance. The intermediate layer 4 in turn can be made of a material that is as inexpensive as possible. The intermediate layer 4 can be made of rough-ground polypropylene, for instance. Further, the intermediate layer 4 can contain mineral fillers, such as chalk or talc. The intermediate layer 4 can also contain a short-term antistatic additive. In such a case, any chips or dust detaching from the ventilation duct 1 during machining do not essentially adhere to the ventilation duct 1 or to the surroundings. It is then easy to clean away the chips and dust. Thus, the intermediate layer does preferably not contain an agent that would make it permanently antistatic, i.e. it is temporarily antistatic.

In the case of Figure 2, the thickness of the inner layer can be 0.1 to 0.3 mm, for instance, and the thickness of the outer layer 3 can be 0.1 to 1 mm, for instance. The thickness of the intermediate layer 4 may vary between 1 and 5 mm, for instance. When the outer diameter of the ventilation duct is for instance 125 mm or 160 mm, the thickness of the inner layer is typically about 0.2 mm, the thickness of the intermediate layer is about 3 mm, and the thickness of the outer layer is about 0.3 mm.

The drawings and the related description are only intended to illustrate the idea of the invention. The invention may vary in detail within the scope of the claims. Thus, it is also possible to mix other than the above-mentioned additives or fillers with the different layers of the ventilation duct 1, if desired. It is also possible to achieve temporary antistaticity on a layer for example by using external antistatic additives. External antistatic additives are dissolved in an appropriate solvent carrier. The plastic is coated with the additive by spraying or immersion. Then the solvent carrier is evaporated. External additives may also be applied such that the plastic is coated for example by a moulder, a secondary processor, or an assembler.

## Claims

1. A plastic ventilation duct that has at least two layers (2, 3, 4) and is made at least partially antistatic such that the ventilation duct comprises a permanently antistatic inner layer (2), **characterized in that** the ventilation duct (1) comprises a temporarily antistatic outer layer (3).

2. A ventilation duct as claimed in claim 1, **characterized in that** the outer layer (3) contains a short-term antistatic additive among its plastic material.

3. A ventilation duct as claimed in claim 1 or 2, **characterized in that** the inner layer (2) and the outer layer (3) are made of polypropylene.

4. A ventilation duct as claimed in any one of the preceding claims, **characterized in that** the inner layer (2) is made permanently antistatic by adding carbon black to its plastic material.

5. A ventilation duct as claimed in any one of the preceding claims, **characterized in that** the outer layer (3) contains a fire retardant and/or colouring agent.

6. A ventilation duct as claimed in any one of the preceding claims, **characterized in that** there is an intermediate layer (4) between the inner layer (2) and outer layer (3).

7. A ventilation duct as claimed in claim 6, **characterized in that** a short-term antistatic additive is mixed with the intermediate layer (4) material.

## Patentansprüche

1. Kunststofflüftungskanal, der mindestens zwei Schichten (2,3,4) aufweist und zumindest teilweise antistatisch ausgeführt ist, so dass der Lüftungskanal eine permanent antistatische Innenschicht (2) aufweist,
**dadurch gekennzeichnet, dass**
der Lüftungskanal (1) eine temporär antistatische Außenschicht (3) aufweist.

2. Lüftungskanal nach Anspruch 1, **dadurch gekennzeichnet, dass** die Au-ßenschicht (3) einen kurzzeitig antistatisch wirkenden Zusatzstoff in ihrem Kunststoffmaterial enthält.

3. Lüftungskanal nach Anspruch 1 oder 2, **dadurch gekennzeichnet, dass** die Innenschicht (2) und die Außenschicht (3) aus Polypropylen gefertigt sind.

4. Lüftungskanal nach einem der vorhergehenden Ansprüche, **dadurch gekennzeichnet, dass** die Innenschicht (2) durch Hinzufügen von Carbon Black zu ihren Kunststoffmaterial permanent antistatisch ausgeführt ist.

5. Lüftungskanal nach einem der vorhergehenden Ansprüche, **dadurch gekennzeichnet, dass** die Außenschicht (3) ein Feuerhemmungs- und/oder Färbemittel enthält.

6. Lüftungskanal nach einem der vorhergehenden Ansprüche, **dadurch gekennzeichnet, dass** eine Zwischenschicht (4) zwischen der Innenschicht (2) und der Außenschicht (3) vorgesehen ist.

7. Lüftungskanal nach Anspruch 6, **dadurch gekennzeichnet, dass** ein kurzzeitig antistatisch wirkender Zusatzstoff mit dem Material der Zwischenschicht (4) gemischt ist.

## Revendications

1. Gaine de ventilation en matière plastique ayant au moins deux couches (2, 3, 4) et rendue au moins partiellement antistatique de telle sorte que la gaine de ventilation comprend une couche intérieure antistatique de façon permanente (2), **caractérisée en ce que** la gaine de ventilation (1) comprend une couche extérieure antistatique temporairement antistatique (3).

2. Gaine de ventilation selon la revendication 1, **caractérisée en ce que** la couche extérieure (3) contient un additif antistatique à court terme dans son matériau plastique.

3. Gaine de ventilation selon la revendication 1 ou la revendication 2, **caractérisée en ce que** la couche intérieure (2) et la couche extérieure (3) sont faites de polypropylène.

4. Gaine de ventilation selon l'une quelconque des revendications précédentes, **caractérisée en ce que** la couche intérieure (2) est rendue antistatique de façon permanente par ajout de noir de carbone à son matériau plastique.

5. Gaine de ventilation selon l'une quelconque des revendications précédentes, **caractérisée en ce que** la couche extérieure (3) contient un retardateur de combustion et/ou un agent colorant.

6. Gaine de ventilation selon l'une des revendications précédentes **caractérisée en ce qu'**il y a une couche intermédiaire (4) entre la couche intérieure (2) et la couche extérieure (3),

7. Gaine de ventilation selon la revendication 6, **caractérisée en ce qu'**un additif antistatique à court terme est mélangé avec le matériau de la couche intermédiaire (4).
